# EUROPÄISCHE PATENTSCHRIFT

(11) **EP 1 932 735 B1**
(45) Veröffentlichungstag und Bekanntmachung des Hinweises auf die Patenterteilung: **15.05.2013**
(21) Anmeldenummer: 07022842.4
(22) Anmeldetag: 26.11.2007
(51) Int. Cl.: B60T 8/1755, B60T 7/22, B60R 21/013

(54) **Verfahren und Bremssystem zum Vermeiden von Multikollisionsunfällen und Abmildern ihrer Auswirkungen**
Process and brake system for avoiding multiple-collision accidents and mitigating their effects
Procédé et système d'empêchement de collisions multiples et d'atténuation de leurs effects

(30) Priorität: 14.12.2006 DE 102006059036
(43) Veröffentlichungstag der Anmeldung: 18.06.2008
(73) Patentinhaber: Volkswagen Aktiengesellschaft, 38440 Wolfsburg (DE)
(72) Erfinder: Zobel, Robert , Dr., 38124 Braunschweig (DE); Leschke, Andre, 38448 Wolfsburg (DE); Baumann, Peter, Dr., 31515 Wunstorf (DE); Zander, André, Dr., 39108 Magdeburg (DE)

(56) Entgegenhaltungen:
- EP-B1- 1 409 313
- DE-A1-102004 055 399
- DE-A1-102004 057 603
- DE-A1-102004 058 814

## Beschreibung

Die Erfindung betrifft ein Verfahren zum Betreiben eines Bremssystems eines Kraftfahrzeugs mit dem Ziel, Multikollisionsunfälle zu vermeiden und/oder ihre Auswirkung abzumildern, sowie ein Bremssystem für ein Kraftfahrzeug.

Auswertungen von Unfalldatenbanken, in denen Daten über Verkehrsunfälle von Kraftfahrzeugen abgespeichert sind, haben ergeben, dass häufig Mehrfachkollisionen auftreten. Bei einer Mehrfachkollision gibt es zwei zeitlich voneinander getrennte Kollisionen des Kraftfahrzeugs mit anderen Gegenständen. Die Auswertungen haben ferner ergeben, dass ein Teil der Mehrfachkollisionen vermieden werden könnte und für einen anderen Teil der Multikollisionsunfälle die Auswirkungen, d.h. die Unfallschwere, abgemildert werden könnte, wenn das Kraftfahrzeug unmittelbar nach der ersten Kollision angemessen gebremst würde. Eine besonders starke Abmilderung der Unfallfolgen bzw. eine besonders große Chance, eine zweite Kollision zu vermeiden, ist in solchen Fällen gegeben, in denen die erste Kollision nur eine "leichte" Kollision ist. Als eine leichte Kollision kann eine solche Kollision eines Kraftfahrzeugs angesehen werden, bei der nur ein Bruchteil, der aufgrund einer Fahrzeugbewegung mit dem Kraftfahrzeug verknüpften kinetischen Energie umgesetzt wird, d.h. dem Kraftfahrzeug als kinetische Energie entzogen wird, beispielsweise durch Verformungsarbeit an Karosserieteilen. Eine Kollision eines Kraftfahrzeugs mit einer Leitplanke unter einem flachen Winkel stellt beispielsweise in der Regel eine leichte Kollision dar. Nach einer solchen Kollision sind Fahrer häufig nicht in der Lage, das Fahrzeug noch zu beherrschen, so dass das Fahrzeug unkontrolliert gegen ein anderes Kraftfahrzeug oder andere in der Umgebung des Kraftfahrzeugs befindliche Gegenstände stößt. Wird das Kraftfahrzeug hingegen nach der ersten Kollision automatisch über ein geeignetes Bremssystem abgebremst, so steigt beispielsweise die Wahrscheinlichkeit, dass der Fahrer das Fahrzeug wieder beherrschen kann und/oder dass das Fahrzeug zu einem Stillstand kommt, bevor es mit einem anderen Gegenstand kollidiert.

Im Stand der Technik sind unterschiedliche Verfahren und Vorrichtungen bekannt, bei denen infolge eines Unfalls eine automatische Bremssteuerung veranlasst wird.

Aus der DE 197 53 971 A1 ist beispielsweise ein Verfahren und eine Vorrichtung zur Steuerung einer Bremsanlage eines Kraftfahrzeugs bekannt, die ein Verschieben eines vor einem Auffahrunfall in Ruhe befindlichen Kraftfahrzeugs in einen Gefahrenbereich, beispielsweise einen Kreuzungsbereich an einer Ampel, verhindern soll. Bei dem Verfahren und der Vorrichtung ist vorgesehen, in einer erkannten Kollisionssituation Bremskraft über die Vorgabe des Fahrers hinaus, vorzugsweise bis auf einen Maximalwert, aufzubauen.

Um die Auswirkung von Auffahrunfällen eines Kraftfahrzeugs auf eine stehende oder sich langsam bewegende Kolonne von Kraftfahrzeugen zu vermindern, ist in der DE 199 12 301 C1 eine Sicherheitseinrichtung für ein Kraftfahrzeug mit mindestens einem Aufprallsensor und einer die Bremsbetätigung des Fahrzeugs nach Maßgabe des Sensorsignals auslösenden Steuereinheit einschließlich einer Signalauswerteschaltung vorgesehen, bei der das Schadensausmaß bei einem Auffahrunfall minimiert und unfallbedingte Folgeschäden dadurch weitgehend vermieden werden, dass die Auswerteschaltung bei einem Anstieg des Sensorsignals über einen vorgegebenen oberen Grenzwert und einem nachfolgenden Signalabfall unter einen vorgegebenen unteren Grenzwert anspricht, derart, dass die Betriebsbremsen des Fahrzeugs zeitgleich mit dem Ende des Aufprallstoßes aktiviert werden.

Aus DE 10 2004 055 399 A1 sind ein Verfahren und eine Vorrichtung zur Steuerung eines Fahrzeugs bekannt, wobei im Falle einer Kollision des Fahrzeugs dieses automatisch gebremst wird, indem eine Bremse des Fahrzeugs betätigt wird, wobei eine Kollision identifiziert wird, falls ein gezündeter Airbag des Fahrzeugs identifiziert wird oder falls eine Verzögerung des Fahrzeugs einen Grenzwert überschreitet.

Aus der DE 10 2004 058 814 A1 sind ein Verfahren und eine Vorrichtung zur Fahrzeugverzögerung nach einer Kollision bekannt. Bei der Vorrichtung und dem Verfahren zur Steuerung der Bremsanlage des Kraftfahrzeugs ist vorgesehen, dass das Vorliegen einer Kollision des Kraftfahrzeugs detektiert wird und bei einer vorliegenden Kollision ein fahrerunabhängiger Bremseingriff durchgeführt wird. Ferner ist vorgesehen, dass abhängig von wenigstens einer Rücknahmebedingung die Intensität des Bremseingriffs zurückgenommen wird. Bei einer Ausführungsform wird das Vorliegen einer Kollision anhand von Ausgangssignalen von Rückhaltemitteln zugeordneten Sensoren ermittelt. Alternativ ist vorgesehen, dass das Vorliegen einer Kollision anhand von Ausgangssignalen von Beschleunigungssensoren detektiert wird. Bei einer weiteren Ausführungsform ist vorgesehen, dass in die Detektion der Kollision zusätzlich die Ausgangssignale von Sensoren eines Fahrdynamikregelsystems eingehen.

Aus der DE 10 2004 057 603 A1 ist ein Verfahren für ein Sicherheitssystem in einem Fahrzeug bekannt, bei dem Umfelddaten einer Umfeldsensorik laufend hinsichtlich einer drohenden Kollision mit einem Hindernis ausgewertet werden und, wenn die Auswertung der Umfelddaten auf eine drohende, aber nicht zwingend stattfindende Kollision schließen lässt, die Bremsanlage des Fahrzeugs vorgespannt wird, indem ein Bremsdruck aufgebaut wird, welcher die Leerwege in der Bremsanlage beseitigt. Wenn die Auswertung derselben Umfelddaten eine unvermeidlich scheinende Kollision anzeigt, wird eine autonome Notbremsung dennoch unterdrückt, wenn eine kritische Querdynamik festgestellt wird.

Aus der EP 1 409 313 B1 sind ein Verfahren und eine Vorrichtung zum automatischen Auslösen einer Verzögerung eines Fahrzeugs zur Verhinderung einer Kollision bekannt, wobei mittels Signalen einer Einrichtung zum Aussenden und Empfangen von Radar- oder Lidarsignalen oder einer Einrichtung zum Empfangen von Videosignalen Objekte im Kursbereich des Fahrzeugs detektiert werden, in Abhängigkeit der erkannten Objekte ein Gefährdungspotential bestimmt wird und bei Überschreiten eines vorgegebenen Gefährdungspotentialschwellenwertes, der unterhalb des Auslöseschwellenwertes für die Verzögerung liegt, die Verzögerungsmittel des Fahrzeugs in einen bremsvorbereitenden Zustand versetzt werden.

Eine schwere erste Kollision kann zuverlässig mittels eines Sensors bzw. der Sensoren eines Sicherheitssystems ermittelt werden. Eine leichte erste Kollision ist hingegen schwieriger zu detektieren. Die hierbei auftretenden Beschleunigungen auf das Fahrzeug können beispielsweise auch bei schlechten Fahrbahnsituationen, beispielsweise beim Durchfahren eines Schlaglochs, auftreten. Ebenso kann ein Fahrzeug auf nasser oder glatter Fahrbahn beim Anfahren oder bei einer Kurvenfahrt ins Schleudern geraten, ohne dass ein Aufprall des Fahrzeugs erfolgt ist. Um solche Fahrsituationen von leichten Kollisionen unterscheiden zu können, ist daher wie oben erwähnt in der DE 10 2004 058 814 A1 eine Ausführungsform vorgesehen, bei der die Sensoren der Rückhaltemittel oder alternativ Ausgangssignale von Beschleunigungssensoren zusätzlich zu Ausgangssignalen von Sensoren eines Fahrdynamikregelsystems gemeinsam ausgewertet werden, um eine Kollision zuverlässig zu detektieren. Hierzu ist vorgeschlagen, die Sensorwerte bzw. Ausgangssignale der Rückhaltemittel und des Fahrdynamikregelsystems in einer gemeinsamen Auswertung zu analysieren. Hierfür ist ein hoher komplexer Rechenaufwand erforderlich.

Der Erfindung liegt die technische Aufgabe zugrunde, ein Bremssystem und ein Verfahren zum Betreiben eines Bremssystems eines Kraftfahrzeugs zu schaffen, mit denen Multikollisionsunfälle vermieden und/oder in ihrer Auswirkung abgemildert werden können, die auf einfache Weise, jedoch zuverlässig Kollisionen des Kraftfahrzeugs von anderen Fahrsituationen unterscheiden können.

Die Aufgabe wird erfindungsgemäß durch ein Verfahren mit den Merkmalen des unabhängigen Patentanspruchs 1 sowie ein Bremssystem mit den Merkmalen des unabhängigen Patentanspruchs 7 gelöst. Vorteilhafte Ausführungsformen der Erfindung ergeben sich aus den Unteransprüchen.

Hierfür ist vorgesehen, ein erstes und ein zweites Sicherheitssignal eines ersten Sicherheitssystems des Fahrzeugs und eines zweiten Sicherheitssystems des Fahrzeugs auszuwerten. Das erste Sicherheitssignal und das zweite Sicherheitssignal geben jeweils ein Maß für eine Abweichung von einem sicheren Fahrzustand an. Ein sicherer Fahrzustand ist ein solcher, bei dem für das Sicherheitssystem keine Veranlassung besteht, aktiviert zu werden bzw. einen Eingriff vorzunehmen. Für das erste Sicherheitssystem existiert eine erste Schwellenbedingung, die von dem ersten Sicherheitssignal abhängig ist. Das erste Sicherheitssystem wird ausgelöst, wenn das erste Sicherheitssignal die Schwellenbedingung erfüllt. Wie im Stand der Technik ist vorgesehen, dass das erste Sicherheitssignal ausgewertet wird und ein automatisches Ansteuern einer Fahrzeugbremsanlage in Abhängigkeit von einem Auswerteergebnis erfolgt. Um insbesondere leichte Kollisionen zuverlässig detektieren zu können ist vorgesehen, dass das Auswerten des ersten Sicherheitssignals ein Auswerten einer von dem ersten Sicherheitssignal abhängigen zweiten Schwellenbedingung umfasst. Das automatische Ansteuern der Fahrzeugbremsanlage bewirkt eine Voraktivierung der Fahrzeugbremsanlage, insbesondere ein Erhöhen des Bremsdrucks, wenn die zweite Schwellenbedingung erfüllt ist, wobei die zweite Schwellenbedingung durch das erste Sicherheitssignal bei einer geringeren Abweichung von dem sicheren Fahrzustand als die erste Schwellenbedingung erfüllt wird. In einem solchen Zustand kann jedoch noch nicht sicher davon ausgegangen werden, dass eine leichte Kollision vorliegt. Werden beispielsweise Beschleunigungssensoren eines ersten Sicherheitssystems·ausgewertet, so können zu einer Kollision vergleichbare Beschleunigungswerte auch beim Durchfahren von Schlaglöchern auftreten. Daher ist vorgesehen, ein zweites Sicherheitssignal einer zweiten Sicherungseinrichtung zu ermitteln und auszuwerten. Das zweite Sicherheitssignal ist ebenfalls ein Maß für eine Abweichung von einem sicheren Fahrzustand. Die Fahrzeugbremsanlage wird angesteuert, eine Bremsung des Kraftfahrzeugs auszuführen, wenn das Auswerten des zweiten Sicherheitssignals zusätzlich ein Erfüllen einer dritten Schwellenbedingung durch das zweite Sicherheitssignal ergibt, wobei die dritte Schwellenbedingung nur ausgewertet wird, wenn die zweite Schwellenbedingung erfüllt ist. Hierdurch wird erreicht, dass nur ein geringer Rechenaufwand zur Überwachung des ersten Sicherheitssignals im normalen Fahrbetrieb notwendig ist. Wenn die zweite Schwellenbedingung durch das erste Sicherheitssignal erfüllt ist, wird bereits eine Voraktivierung der Bremsanlage durchgeführt. Erst nach dem Ermitteln eines kritischen Fahrzustandes anhand des ersten Sicherheitssignals wird auch das zweite Sicherheitssignal eines anderen Sicherheitssystems ausgewertet. Nur wenn dieses Sicherheitssystem zeitlich nachgelagert ebenfalls einen kritischen Zustand des Fahrzeugs ' anzeigt, wird die automatische Bremsung des Fahrzeugs fahrerunabhängig eingeleitet. Durch die Voraktivierung der Bremsanlage wird der Vorteil erreicht, dass der Fahrer, der den aufgrund des ersten Sicherheitssignals detektierten kritischen Fahrzustand möglicherweise ebenfalls als kritisch empfindet und von sich aus eine Bremsung einleitet, schneller einen Bremsdruckaufbau an den Fahrzeugbremsen erreicht, da die Voraktivierung bereits während der menschlichen Reaktionszeit ausgeführt oder zumindest ausgelöst wird. Ferner ist ein Rechenaufwand und ein Überwachungsaufwand deutlich reduziert, da das zweite Sicherheitssignal nicht fortwährend ausgewertet werden muss. Dennoch können leichte Kollisionen, die anhand nur eines Sicherheitssignals nicht zuverlässig detektiert werden können, zuverlässig als solche erkannt werden.

Bei einer bevorzugten Ausführungsform der Erfindung ist vorgesehen, dass ein Ansteuern der Bremsanlage zum Auslösen einer Bremsung nur erfolgt, wenn das Erfüllen der dritten Schwellenbedingung innerhalb eines vorgegebenen Zeitintervalls nach dem Erfüllen der zweiten Schwellenbedingung ermittelt wird. Hierdurch ist es möglich, voneinander unabhängig auftretende kritische Fahrzustände der unterschiedlichen Sicherheitssysteme als solche isolierten Ereignisse zu betrachten und nicht fälschlich als Kollision zu detektieren.

Bei einer besonders bevorzugten Ausführungsform wird das erste Sicherheitssignal von Rückhaltemitteln, insbesondere einem Airbagsystem, ermittelt. Die ermittelten Signale eines Rückhaltesystems eignen sich ganz besonders zum Ermitteln einer Kollision, da in der Regel bei jeder Kollision von den Rückhaltemitteln zumindest ein kritischer Fahrzeugzustand detektiert wird.

Ausführungsformen, bei denen das zweite Sicherheitssignal von einem Fahrstabilitätssystem ermittelt wird, haben sich als besonders vorteilhaft erwiesen. Ein automatischer Bremseingriff zur Vermeidung einer zweiten Kollision ist in der Regel dann nur erforderlich, wenn von dem Fahrstabilitätssystem des Fahrzeugs ein kritischer Fahrzeugzustand ermittelt wird. Fahrsituationen, in denen zwar ein erstes Sicherheitssystem einen kritischen Fahrzustand anzeigt, jedoch das Fahrstabilitätssystem keinen kritischen Fahrzustand nachfolgend anzeigt, stehen in der Regel nicht mit einer leichten Kollision in Zusammenhang und können von dem Fahrer adäquat gehandhabt werden.

Bei einer bevorzugten Weiterbildung der Erfindung ist vorgesehen, dass eine Bremsintensität und/oder eine Art der Bremsung in Abhängigkeit von Signalen weiterer Fahrzeugsysteme, insbesondere einer Geschwindigkeitsmesseinrichtung, eines adaptiven Geschwindigkeitsregelsystems (ACC - Adaptive Cruise Control), eines Spurwechselassistenten und/oder einer Umgebungssensorik, beeinflusst werden. Bei einer Ausführungsform kann vorgesehen sein, dass die automatische Bremsung des Fahrzeugs auch in solchen Situationen eingeleitet wird, in denen das erste Sicherheitssignal die erste Schwellenbedingung erfüllt. Hierdurch ist gewährleistet, dass in Situationen, in denen eine schwere erste Kollision auftritt, die Bremsanlage unverzüglich angesteuert wird, um eine Bremsung des Fahrzeugs auszuführen.

Eine besonders sensible Erfassung von leichten Kollisionen erreicht man, wenn für das zweite Sicherheitssystem eine von dem zweiten Sicherheitssignal abhängige vierte Schwellenbedingung existiert, die durch das zweite Sicherheitssignal erst bei einer größeren Abweichung von einem sicheren Fahrzustand erfüllt wird als die dritte Schwellenbedingung und das zweite Sicherheitssystem erst beim Erfüllen der vierten Schwellenbedingung ausgelöst wird. Dies bedeutet, dass eine leichte Kollision bereits dann erkannt wird, wenn sowohl das erste Sicherheitssystem als auch das zweite Sicherheitssystem in zeitlicher Abfolge jeweils nur einen kritischen Fahrzeugzustand anzeigen, der jedoch individuell das jeweilige Sicherheitssystem nicht auslöst.

Die Erfindung wird nachfolgend anhand eines bevorzugten Ausführungsbeispiels näher erläutert. Hierbei zeigt:
- Fig. 1: ein schematisches Ablaufdiagramm eines Verfahrens zum Betreiben eines Bremssystems; und
- Fig. 2: eine Ausführungsform eines Kraftfahrzeugs mit einem Bremssystem für ein Kraftfahrzeug.

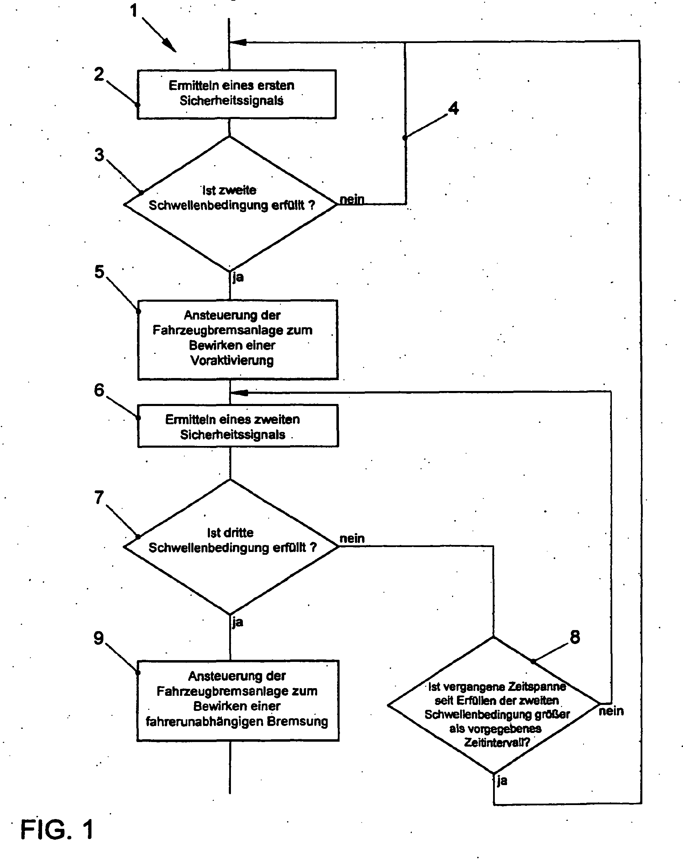

In Fig. 1 ist schematisch ein Ablaufdiagramm eines Verfahrens 1 zum Betreiben eines Bremssystems eines Kraftfahrzeugs dargestellt, welches vorgesehen ist, Multikollisionsunfälle zu vermeiden und/oder ihre Auswirkung abzumildern. Bei dem Verfahren 1 ist vorgesehen, dass ein erstes Sicherheitssignal eines ersten Sicherheitssystems eines Kraftfahrzeugs ermittelt wird 2.

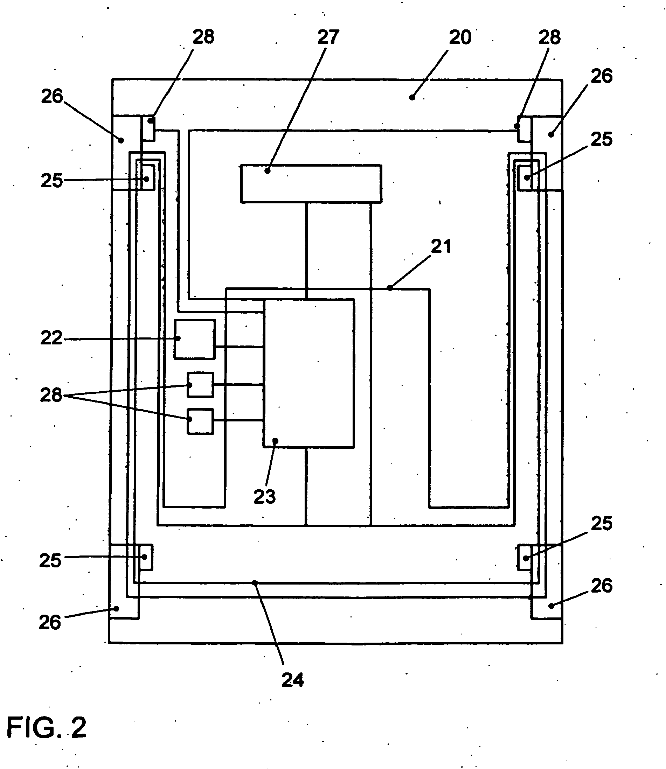

In Fig. 2 ist ein Kraftfahrzeug 20 mit einem Bremssystem 21 schematisch dargestellt. Bei der in Fig. 2 dargestellten Ausführungsform ist das erste Sicherheitssystem 22 ein als Airbagsystem ausgebildetes Rückhaltemittelsystem. Das Bremssystem 21 umfasst eine als Steuergerät 23 ausgebildete Steuereinheit, die das erste Sicherheitssignal des ersten Sicherheitssystems 22 erfasst.

Für das erste Sicherheitssystem 22 existiert Eine erste Schwellenbedingung, die von dem ersten Sicherheitssignal abhängig ist. Das erste Sicherheitssystem 22 wird ausgelöst, wenn die erste Schwellenbedingung durch das erste Sicherheitssignal erfüllt ist. Das erste Sicherheitssignal kann beispielsweise aus Messwerten von Beschleunigungssensoren des als Airbagsystem ausgebildeten ersten Sicherheitssystems 22 abgeleitet sein. Es existiert ferner eine zweite Schwellenbedingung für das erste Sicherheitssignal, die bereits bei einer Abweichung von einem sicheren Fahrzustand erfüllt ist, die geringer ist als die Abweichung, welche zu einem Erfüllen der ersten Schwellenbedingung führt. Bezogen auf ein Airbagsystem bedeutet dies, dass die zweite Schwellenbedingung bereits bei Beschleunigungswerten erfüllt ist, die noch nicht ausreichen, das Airbagsystem selbst auszulösen.

Um jedoch auch leichte Kollisionen zuverlässig erfassen zu können, ist bei dem Verfahren 1 nach Fig. 1 vorgesehen, dass bei der Auswertung des ersten Sicherheitssignals abgeprüft wird, ob die zweite Schwellenbedingung erfüllt ist 3. Ist dies nicht der Fall, so wird das Ermitteln und/oder Erfassen des ersten Sicherheitssignals und Auswerten zyklisch wiederholt, wie dies mittels eines Pfeils 4 angedeutet ist. Ist die zweite Schwellenbedingung erfüllt, so wird eine Bremsanlage 24 des Kraftfahrzeugs 20 so angesteuert, dass eine Voraktivierung stattfindet. Eine Voraktivierung der Bremsanlage umfasst in der Regel ein Anheben eines Bremsdrucks, der jedoch noch nicht so hoch ist, dass einzelne Fahrzeugbremsen 25 Räder 26 des Fahrzeugs bremsen. Um ein solches Bremsen auszulösen, ist jedoch nur noch eine sehr geringe Druckerhöhung notwendig.

Ferner wird ein zweites Sicherheitssignal eines zweiten Sicherheitssystems ermittelt und/oder erfasst 6. Bei der Ausführungsform nach Fig. 2 ist das zweite Sicherheitssystem 27 als Fahrstabilitätssystem ausgebildet. Solche Systeme sind auch unter dem Begriff ESP-Elektronisches Stabilitätsprogramm - bekannt. Das zweite Sicherheitssignal gibt somit beispielsweise ein Maß für ein Übersteuern, Untersteuem und/oder ein Schleudern usw. des Kraftfahrzeugs an. Nachdem die zweite Schwellenbedingung erfüllt ist, wird somit das ermittelte zweite Sicherheitssignal ausgewertet. Hierbei wird ermittelt, ob eine dritte Schwellenbedingung, die von dem zweiten Sicherheitssignal abhängig ist, erfüllt ist 7.

Ist die dritte Schwellenbedingung nicht erfüllt, so wird abgefragt, ob seit dem Erfüllen der zweiten Schwellenbedingung eine Zeitspanne vergangen ist, die größer als ein vorgegebenes Zeitintervall ist 8. Ist die Zeitspanne größer als das vorgegebene Zeitintervall, so sind die Ereignisse, die zum Erfüllen der zweiten Schwellenbedingung und der dritten Schwellenbedingung geführt haben, als kausal nicht miteinander verknüpft anzusehen. Das Verfahren 1 wird somit mit dem Ermitteln/Erfassen des ersten Sicherheitssignals 2 fortgesetzt. Ist die Zeitspanne geringer als das vorgegebene Zeitintervall, so wird das Verfahren mit dem Ermitteln und Erfassen des zweiten Sicherheitssignals fortgesetzt 6.

Hat die Abfrage ergeben, dass die dritte Schwellenbedingung durch das zweite Sicherheitssignal erfüllt ist, d.h., dass zeitlich nachfolgend nach dem Erfüllen der zweiten Schwellenbedingung auch die dritte Schwellenbedingung erfüllt ist, so wird die Bremsanlage in der Weise angesteuert 9, dass eine automatische, fahrerunabhängige Bremsung des Fahrzeugs 20 ausgelöst wird.

Bei der in Fig. 2 dargestellten Ausführungsform werden das erste Sicherheitssignal von dem ersten Sicherheitssystem 22 und das zweite Sicherheitssignal von dem zweiten Sicherheitssystem 27 zu dem Steuergerät 23 übermittelt.. Die Auswertung erfolgt bei dieser Ausführungsform in dem Steuergerät 23. Das Bremssystem kann jedoch auch als vernetztes System umgesetzt sein, bei dem einzelne Verfahrensschritte und Arbeitsschritte in anderen Steuergeräten ausgeführt werden.

Die Art und Weise der Bremsung kann bevorzugt in Abhängigkeit einer Schwere des Unfalls erfolgen. Hierzu kann das erste Sicherheitssignal und/oder das zweite Sicherheitssignal ausgewertet werden. Vorteilhafterweise wird beispielsweise hierbei eine Auslösegeschwindigkeit des Airbags berücksichtigt. Ist die Auslösegeschwindigkeit sehr hoch, so wird bevorzugt mit einem sehr hohen Bremsdruck gebremst, da von einem besonders schweren Unfall auszugehen ist. Wird hingegen aufgrund der Auslösegeschwindigkeit des Airbags eine nur leichte Kollision festgestellt, so wird mit einem geringeren Bremsdruck gebremst, um einem Fahrer die Möglichkeit zu geben, noch aktiv in die Steuerung des Fahrzeugs mit einzugreifen. Dieses ist bei einem besonders schweren Aufprall in der Regel nicht mehr zu erwarten, so dass mit maximaler Bremskraft gebremst werden kann.

Neben dem Bremsdruck kann auch die Art der Bremsung, beispielsweise kontinuierliche Bremskraft oder intermittierende Bremskraft (Stotterbremse), anhand der Auswertung des ersten und/oder zweiten Sicherheitssignals erfolgen. Ferner können Signale weiterer Fahrzeugsysteme 28 berücksichtigt werden. Insbesondere können Signale einer Geschwindigkeitsmesseinrichtung, einer adaptiven Geschwindigkeitsregelanlage (ACC - Adaptive Cruise Control), eines Spurwechselassistenten und/oder einer Umgebungssensorik, beispielsweise von Ultraschall- und/oder Radarsensoren, berücksichtigt werden. Die Signale der weiteren Fahrzeugsysteme 28 können bei einer bevorzugten Ausführungsform verwendet werden, um weitere Kriterien zu schaffen, die eine Detektionskollision ermöglichen und/oder verfeinern.

Das beschriebene Verfahren sowie das beschriebene Bremssystem stellen lediglich beispielhafte Ausgestaltungen dar. Die einzelnen in der Anmeldung offenbarten Merkmale können auch in anderer Weise sinnvoll kombiniert werden, um ein Bremssystem bzw. ein Verfahren zum Betreiben eines Bremssystems zu schaffen, das Mehrfachkollisionen zu vermeiden hilft und/oder Auswirkungen von Mehrfachkollisionen abmildert.

### Bezugszeichenliste

- 1: Verfahren zum Betreiben eines Bremssystems
- 2: Ermitteln des ersten Sicherheitssignals
- 3: Abfrage: Ist zweite Schwellenbedingung erfüllt?
- 4: Pfeil
- 5: Voraktivieren der Bremsanlage
- 6: Ermitteln eines zweiten Sicherheitssignals
- 7: Abfrage: Ist dritte Schwellenbedingung erfüllt?
- 8: Abfrage: Ist eine Zeitspanne verstrichen, die größer als ein vorgegebenes Zeitintervall ist?
- 9: Ansteuern der Bremsanlage, um eine automatische, fahrerunabhängige Bremsung des Fahrzeugs auszulösen
- 20: Kraftfahrzeug
- 21: Bremssystem
- 22: erstes Sicherheitssystem
- 23: Steuergerät
- 24: Bremsanlage
- 25: Fahrzeugbremse
- 26: Räder
- 27: zweites Sicherheitssystem
- 28: weitere Fahrzeugsysteme

## Patentansprüche

1. Verfahren (1) zum Betreiben eines Bremssystems (21) eines Kraftfahrzeugs (20), um Multikollisionsunfälle zu vermeiden und/oder in ihrer Auswirkung abzumildern, umfassend die Schritte,
Ermitteln eines ersten Sicherheitssignals eines ersten Sicherheitssystems (22) des Kraftfahrzeugs (20), wobei das erste Sicherheitssignal ein Maß für ein Abweichen von einem sicheren Fahrzustand des Kraftfahrzeugs (20) angibt und für das erste Sicherheitssystem (22) eine erste Schwellenbedingung existiert und wobei das erste Sicherheitssystem (22) ausgelöst wird, wenn das erste Sicherheitssignal die erste Schwellenbedingung erfüllt,
Auswerten des ersten Sicherheitssignals, und
automatisches Ansteuern einer Fahrzeugbremsanlage (24) in Abhängigkeit von einem Auswertungsergebnis,
**dadurch gekennzeichnet, dass**
das Auswerten des ersten Sicherheitssignals ein Auswerten einer von dem ersten Sicherheitssignal abhängigen zweiten Schwellenbedingung umfasst und das automatische Ansteuern ein Bewirken einer Voraktivierung der Fahrzeugbremsanlage (24), insbesondere ein Erhöhen eines Bremsdrucks, umfasst, wenn die zweite Schwellenbedingung erfüllt ist, wobei die zweite Schwellenbedingung durch das erste Sicherheitssignal bei einer geringeren Abweichung von dem sicheren Fahrzustand als die erste Schwellenbedingung erfüllt wird, und ein zweites Sicherheitssignal eines zweiten Sicherheitssystems (27) ermittelt und ausgewertet wird, wobei das zweite Sicherheitssignal ebenfalls ein Maß für eine Abweichung von einem sicheren Fahrzustand angibt und die Fahrzeugbremsanlage (24) angesteuert wird, eine Bremsung des Kraftfahrzeugs (20) auszuführen, wenn das Auswerten des zweiten Sicherheitssignals zusätzlich ein Erfüllen einer dritten Schwellenbedingung durch das zweite Sicherheitssignal ergibt, wobei die dritte Schwellenbedingung nur ausgewertet wird, wenn die zweite Schwellenbedingung erfüllt ist.

2. Verfahren (1) nach Anspruch 1, **dadurch gekennzeichnet, dass** ein Ansteuern der Fahrzeugbremsanlage (24) zum Auslösen einer Bremsung nur erfolgt, wenn das Erfüllen der dritten Schwellenbedingung innerhalb eines vorgegebenen Zeitintervalls nach dem Erfüllen der zweiten Schwellenbedingung ermittelt wird.

3. Verfahren (1) nach Anspruch 1 oder 2, **dadurch gekennzeichnet, dass** das erste Sicherheitssignal von einem Rückhaltesystem, insbesondere einem Airbag-System, ermittelt wird.

4. Verfahren (1) nach einem der Ansprüche 1 bis 3, **dadurch gekennzeichnet, dass** das zweite Sicherheitssignal von einem Fahrstabilitätssystem ermittelt wird.

5. Verfahren (1) nach einem der Ansprüche 1 bis 4, **dadurch gekennzeichnet, dass** eine Bremsintensität und/oder eine Art der Bremsung in Abhängigkeit von Signalen weiterer Fahrzeugsysteme (28), insbesondere einer Geschwindigkeitsmesseinrichtung, eines adaptiven Geschwindigkeitsregelsystems (ACC - Adaptive Cruise Control), eines Spurwechselassistenten, einer Umgebungssensorik, beeinflusst werden.

6. Verfahren (1) nach einem der Ansprüche 1 bis 5, **dadurch gekennzeichnet, dass** für das zweite Sicherheitssystem (27) eine von dem zweiten Sicherheitssignal abhängige vierte Schwellenbedingung existiert, die durch das zweite Sicherheitssignal erst bei einer größeren Abweichung von einem sicheren Fahrzustand erfüllt wird als die dritte Schwellenbedingung und das zweite Sicherheitssystem (27) erst beim Erfüllen der vierten Schwellenbedingung ausgelöst wird.

7. Bremssystem (21) für ein Kraftfahrzeug (20) zur Vermeidung und/oder Abmilderung der Auswirkung von Multikollisionsunfällen, umfassend eine Steuereinheit zum Empfangen eines ersten Sicherheitssignals eines ersten Sicherheitssystems (22) des Kraftfahrzeugs (20), wobei das erste Sicherheitssignal ein Maß für ein Abweichen von einem sicheren Fahrzustand des Kraftfahrzeugs (20) angibt und für das erste Sicherheitssystem (22) eine erste Schwellenbedingung existiert und wobei das erste Sicherheitssystem (22) ausgelöst
wird, wenn das erste Sicherheitssignal die Schwellenbedingung erfüllt, und zum Auswerten des ersten Sicherheitssignals und zum Ansteuern einer Fahrzeugbremsanlage (24) in Abhängigkeit eines Ergebnisses der Auswertung,
**dadurch gekennzeichnet, dass**
das Auswerten des ersten Sicherheitssignals ein Auswerten einer von dem ersten Sicherheitssignal abhängigen zweiten Schwellenbedingung umfasst und die Steuereinheit ausgestaltet ist, die Fahrzeugbremsanlage (24) so anzusteuern, dass eine Voraktivierung bewirkt wird; insbesondere ein Erhöhen eines Bremsdrucks, wenn die zweite Schwellenbedingung erfüllt ist, wobei die zweite Schwellenbedingung durch das erste Sicherheitssignal bei einer geringeren Abweichung von dem sicheren Fahrzustand als die ersten Schwellenbedingung erfüllt wird, und die Steuereinheit ferner ausgebildet ist, ein zweites Sicherheitssignal einer zweiten Sicherheitseinrichtung (27) zu erfassen und auszuwerten, wobei das zweite Sicherheitssignal ebenfalls ein Maß für eine Abweichung von einem sicheren Fahrzustand angibt, und die Fahrzeugbremsanlage (24), wenn das
Auswerten des zweiten Sicherheitssignals zusätzlich ein Erfüllen einer dritten Schwellenbedingung durch das zweite Sicherheitssignal ergibt, so anzusteuern, dass eine fahrerunabhängige Bremsung des Kraftfahrzeugs (20) ausgeführt wird, wobei vorgesehen ist, dass die Auswertung der dritten Schwellenbedingung nur erfolgt, wenn die zweite Schwellenbedingung erfüllt ist.

8. Bremssystem (21) nach Anspruch 7, **dadurch gekennzeichnet, dass** ein Ansteuern der Fahrzeugbremsanlage (24) zum Auslösen einer Bremsung nur erfolgt, wenn das Erfüllen der der dritten Schwellenbedingung innerhalb eines vorgegebenen Zeitintervall nach dem Erfüllen der zweiten Schwellenbedingung ermittelt wird.

9. Bremssystem (21) nach Anspruch 7 oder 8, **dadurch gekennzeichnet, dass** das erste Sicherheitssystem (21) ein Rückhaltesystem, insbesondere ein Airbag-System, ist.

10. Bremssystem (21) nach einem der Ansprüche 7 bis 9, **dadurch gekennzeichnet, dass** das zweite Sicherheitssystem (27) ein Fahrstabilitätssystem ist.

11. Bremssystem (21) nach einem der Ansprüche 7 bis 10, **dadurch gekennzeichnet, dass** eine Bremsintensität und/oder Art der Bremsung in Abhängigkeit von Signalen weiterer Fahrzeugsysteme (28), insbesondere einer Geschwindigkeitsmesseinrichtung, eines adaptiven Geschwindigkeitsegelsystem (ACC - Adaptive Cruise Control), eines Spurwechselassistenten, einer Umgebungssensorik, beeinflussbar ist.

12. Bremssystem (21) nach einem der Ansprüche 7 bis 11, **dadurch gekennzeichnet, dass** für
das zweite Sicherheitssystem (27) eine von dem zweiten Sicherheitssignal abhängige vierte Schwellenbedingung existiert, die durch das zweite Sicherheitssignal erst bei einer
größeren Abweichung von einem sicheren Fahrzustand erfüllt wird als die dritte Schwellenbedingung, und das zweite Sicherheitssystem (27) erst beim Erfüllen der vierten Schwellenbedingung ausgelöst wird.

## Claims

1. Method (1) for operating a brake system (21) of a motor vehicle (20) in order to avoid multi-collision accidents and/or to mitigate their effect, comprising the steps,
determining a first safety signal of a first safety system (22) of the motor vehicle (20), wherein the first safety signal indicates a measure of deviation from a safe driving state of the motor vehicle (20), and there is a first threshold condition for the first safety system (22), and wherein the first safety system (22) is triggered if the first safety signal meets the first threshold condition,
evaluation of the first safety signal, and
automatic actuation of a vehicle brake system (24) as a function of an evaluation result,
**characterized in that**
evaluation of the first safety signal comprises evaluating a second threshold condition which is dependent on the first safety signal, and the automatic actuation comprises bringing about pre-activation of the vehicle brake system (24), in particular increasing a brake pressure, if the second threshold condition is met, wherein the second threshold condition is met by the first safety signal if there is a smaller deviation from the safe driving state than the first threshold condition, and a second safety signal of a second safety system (27) is determined and evaluated, wherein the second safety signal also specifies a measure of a deviation from a safe driving state, and the vehicle brake system (24) is actuated to carry out braking of the motor vehicle (20) when the evaluation of the second safety signal additionally reveals that a third threshold condition is met by the second safety signal, wherein the third threshold condition is evaluated only if the second threshold condition is met.

2. Method (1) according to Claim 1, **characterized in that** the vehicle brake system (24) is actuated to trigger a braking operation only if the fact that the third threshold condition is met within a predefined time interval is determined after the second threshold condition has been met.

3. Method (1) according to Claim 1 or 2, **characterized in that** the first safety signal is determined by a restraint system, in particular an airbag system.

4. Method (1) according to one of Claims 1 to 3, characterized in' that the second safety signal is determined by a driving stability system.

5. Method (1) according to one of Claims 1 to 4, **characterized in that** a braking intensity and/or a method of braking are/is influenced as a function of signals of further vehicle systems (28), in particular a speed measuring device, an adaptive cruise controller (ACC), a lane change assistant, a surroundings sensor system.

6. Method (1) according to one of Claims 1 to 5, **characterized in that**, for the second safety system (27), there is a fourth threshold condition which is dependent on the second safety signal and is not met by the second safety signal until there is a larger' deviation from a safe driving state than the third threshold condition, and the second safety system (27) is not triggered until the fourth threshold condition is met.

7. Brake system (21) for a motor vehicle (20) for avoiding and/or mitigating the effect of multi-collision accidents, comprising a control unit for receiving a first safety signal of a first safety system (22) of the motor vehicle (20), wherein the first safety signal indicates a measure of deviation from a safe driving state of the motor vehicle (20), and there is a first threshold condition for the first safety system (22), and wherein the first safety system (22) is triggered if the first safety signal meets the threshold condition, and for evaluating the first safety signal and for actuating a vehicle brake system (24) as a function of a result of the evaluation, **characterized in that**
the evaluation of the first safety signal comprises evaluating a second threshold condition which is dependent on the first safety signal, and the control unit is designed to actuate the vehicle brake system (24) in such a way that pre-activation is brought about, in particular a brake pressure is increased, if the second threshold condition is met, wherein the second threshold condition is met by the first safety signal when there is a smaller deviation from the safe driving state than the first threshold condition, and the control unit is also designed to detect and evaluate a second safety signal of a second safety device (27), wherein the second safety signal also indicates a measure of deviation from a safe driving state, and, when the evaluation of the second safety signal additionally reveals that a third threshold condition is met by the second safety signal, to actuate the vehicle brake system (24) in such a way that driver-independent braking of the motor vehicle (20) is carried out, wherein there is provision that the third threshold condition is evaluated only if the second threshold condition is met.

8. Brake system (21) according to Claim 7, **characterized in that** the vehicle brake system (24) is actuated to trigger a braking operation only if it is determined that the third threshold condition is met within a predefined time interval after the second threshold condition is met.

9. Brake system (21) according to Claim 7 or 8, **characterized in that** the first safety system (21) is a restraining system, in particular an airbag system.

10. Brake system (21) according to one of Claims 7 to 9, **characterized in that** the second safety system (27) is a driving stability system.

11. Brake system (21) according to one of Claims 7 to 10, **characterized in that** a braking intensity and/or method of braking can be influenced as a function of signals of further vehicle systems (28), in particular a speed measuring device, an adaptive cruise controller (ACC), a lane change assistant, a surroundings sensor system.

12. Brake system (21) according to one of Claims 7 to 11, **characterized in that**, for the second safety system (27), there is a fourth threshold condition which is dependent on the second safety signal and is not met by the second safety signal until there is a larger deviation from a safe driving state than the third threshold condition, and the second safety system (27) is not triggered until the fourth threshold condition is met.

## Revendications

1. Procédé (1) pour faire fonctionner un système de freinage (21) d'un véhicule automobile (20), pour éviter des collisions multiples et/ou atténuer leurs effets, comprenant les étapes suivantes :
détection d'un premier signal de sécurité d'un premier système de sécurité (22) du véhicule automobile (20), le premier signal de sécurité indiquant une mesure d'un écart par rapport à un état de conduite sûr du véhicule automobile (20) et une première condition de seuil existant pour le premier système de sécurité (22), et le premier système de sécurité (22) étant déclenché lorsque le premier signal de sécurité satisfait à la première condition de seuil,
analyse du premier signal de sécurité, et
commande automatique d'une installation de freinage du véhicule (24) en fonction d'un résultat de l'analyse,
**caractérisé en ce que**
l'analyse du premier signal de sécurité comprend une analyse d'une deuxième condition de seuil dépendant du premier signal de sécurité et la commande automatique comprend le déclenchement d'une pré-activation de l'installation de freinage du véhicule (24), en particulier une augmentation de la pression de freinage, lorsque la deuxième condition de seuil est satisfaite, la deuxième condition de seuil étant satisfaite par le premier signal de sécurité dans le cas d'un écart par rapport à l'état de conduite sûr plus petit que pour la première condition de seuil, et un deuxième signal de sécurité d'un deuxième système de sécurité (27) étant détecté et analysé, le deuxième signal de sécurité indiquant aussi une mesure d'un écart par rapport à un état de conduite sûr et l'installation de freinage du véhicule (24) étant commandée pour effectuer un freinage du véhicule automobile (20) lorsque l'analyse du deuxième signal de sécurité indique en outre la satisfaction d'une troisième condition de seuil par le deuxième signal de sécurité, la troisième condition de seuil n'étant analysée que lorsque la deuxième condition de seuil est satisfaite.

2. Procédé (1) selon la revendication 1, **caractérisé en ce qu'**une commande de l'installation de freinage du véhicule (24) pour le déclenchement d'un freinage n'a lieu que lorsque la satisfaction de la troisième condition de seuil est détectée en l'espace d'un intervalle de temps prédéfini après la satisfaction de la deuxième condition de seuil.

3. Procédé (1) selon la revendication 1 ou 2, **caractérisé en ce que** le premier signal de sécurité est détecté par un système de retenue, notamment un système d'airbag.

4. Procédé (1) selon l'une quelconque des revendications 1 à 3, **caractérisé en ce que** le deuxième signal de sécurité est détecté par un système de stabilité de conduite.

5. Procédé (1) selon l'une quelconque des revendications 1 à 4, **caractérisé en ce qu'**une intensité de freinage et/ou un type de freinage sont influencés en fonction de signaux d'autres systèmes du véhicule (28), en particulier d'un dispositif de mesure de la vitesse, d'un système de régulation de la vitesse adaptatif (ACC - Adaptive Cruise Control), d'un système d'aide au changement de voie, d'un système de capteur de l'environnement.

6. Procédé (1) selon l'une quelconque des revendications 1 à 5, **caractérisé en ce que** pour le deuxième système de sécurité (27) existe une quatrième condition de seuil dépendant du deuxième signal de sécurité, laquelle est satisfaite par le deuxième signal de sécurité seulement dans le cas d'un écart par rapport à un état de conduite sûr plus grand que pour la troisième condition de seuil, et le deuxième système de sécurité (27) n'est déclenché que lorsque la quatrième condition de sécurité est satisfaite.

7. Système de freinage (21) pour un véhicule automobile (20) pour éviter des collisions multiples et/ou atténuer leurs effets, comprenant une unité de commande pour recevoir un premier signal de sécurité d'un premier système de sécurité (22) du véhicule automobile (20), le premier signal de sécurité indiquant une mesure d'un écart par rapport à un état de conduite sûr du véhicule automobile (20) et une première condition de seuil existant pour le premier système de sécurité (22), et le premier système de sécurité (22) étant déclenché lorsque le premier signal de sécurité satisfait à la première condition de seuil, et pour l'analyse du premier signal de sécurité et pour la commande d'une installation de freinage du véhicule (24) en fonction d'un résultat de l'analyse,
**caractérisé en ce que**
l'analyse du premier signal de sécurité comprend une analyse d'une deuxième condition de seuil dépendant du premier signal de sécurité et l'unité de commande est configurée de manière à commander l'installation de freinage du véhicule (24) de telle sorte qu'une pré-activation soit déclenchée, en particulier une augmentation d'une pression de freinage, lorsque la deuxième condition de sécurité est satisfaite, la deuxième condition de sécurité étant satisfaite par le premier signal de sécurité dans le cas d'un écart par rapport à l'état de conduite sûr plus petit que pour la première condition de sécurité, et l'unité de commande étant en outre réalisée de manière à détecter et analyser un deuxième signal de sécurité d'un deuxième dispositif de sécurité (27), le deuxième signal de sécurité indiquant également une mesure d'un écart par rapport à un état de conduite sûr, et à commander l'installation de freinage du véhicule (24), lorsque l'analyse du deuxième signal de sécurité indique en outre une satisfaction d'une troisième condition de seuil par le deuxième signal de sécurité, de telle sorte qu'un freinage du véhicule automobile (20) indépendant du conducteur soit effectué, et il est prévu que l'analyse de la troisième condition de seuil n'ait lieu que lorsque la deuxième condition de seuil est satisfaite.

8. Système de freinage (21) selon la revendication 7, **caractérisé en ce qu'**une commande de l'installation de freinage du véhicule (24) pour déclencher un freinage n'a lieu que lorsque l'on détecte que la troisième condition de seuil est satisfaite en l'espace d'un intervalle de temps prédéfini après la satisfaction de la deuxième condition de seuil.

9. Système de freinage (21) selon la revendication 7 ou 8, **caractérisé en ce que** le premier système de sécurité (22) est un système de retenue, notamment un système d'airbag.

10. Système de freinage (21) selon l'une quelconque des revendications 7 à 9, **caractérisé en ce que** le deuxième système de sécurité (27) est un système de stabilité de conduite.

11. Système de freinage (21) selon l'une quelconque des revendications 7 à 10, **caractérisé en ce qu'**une intensité de freinage et/ou un type de freinage peuvent être influencés en fonction de signaux provenant d'autres systèmes du véhicule (28), notamment un dispositif de mesure de la vitesse, un système de régulation de la vitesse adaptatif (ACC - Adaptive Cruise Control), un système d'aide au changement de voie, un système de capteur de l'environnement.

12. Système de freinage (21) selon l'une quelconque des revendications 7 à 11, **caractérisé en ce que** pour le deuxième système de sécurité (27), existe une quatrième condition de seuil dépendant du deuxième signal de sécurité, laquelle est satisfaite par le deuxième signal de sécurité seulement dans le cas d'un écart par rapport à un état de conduite sûr plus grand que pour la troisième condition de seuil, et le deuxième système de sécurité (27) n'est déclenché que lorsque la quatrième condition de sécurité est satisfaite.
